# EUROPEAN PATENT APPLICATION

(11) **EP 2 762 735 A1**
(43) Date of publication of application: **06.08.2014**
(21) Application number: 11873327.8
(22) Date of filing: 29.09.2011
(51) Int. Cl.: F16C 17/03

(54) **DIRECT LUBRICATION-TYPE TILTING PAD JOURNAL BEARING**

(71) Applicant: Hitachi, Ltd., Tokyo 100-8280 (JP)
(72) Inventor: HEMMI Makoto, Tokyo 100-8280 (JP); SUZUKI Kenta, Tokyo 100-8280 (JP)
(74) Representative: MERH-IP Matias Erny Reichl Hoffmann
(86) International application number: PCT/JP2011/072448
(87) International publication number: WO 2013/046404

(57) **Abstract**

A direct lubrication tilting pad journal bearing that may suppress vibration without increasing a quantity of oil feed from nozzles is provided.

In the direct lubrication tilting pad journal bearing, a pad 2 has an oil collection path 6 in a groove shape. The oil collection path 6 is formed so that an inlet 7 may open in an opposite end surface to a rotation direction of a rotation shaft 1 in the pad 2, an outlet 8 may open in an inner circumferential surface of the pad 2, and the inlet 7 and the outlet 8 may continuously open. Further, a width dimension w2 of the oil collection path 6 is smaller than a width dimension w1 of the pad 2. Furthermore, a depth dimension h from an outer circumferential surface of the rotation shaft 1 to a bottom surface of the oil collection path 6 is larger than a distance d from the outer circumferential surface of the rotation shaft 1 to an end of a nozzle 3.

## Description

### Technical Field

This invention relates to a tilting pad journal bearing used for high-speed rotating machines such as turbines, and specifically to a direct lubrication tilting pad journal bearing.

### Background Art

In high-speed rotating machines such as turbines, for example, a tilting pad journal bearing as shown in NPL 1 is used. The tilting pad journal bearing has a plurality of pads placed at the outer circumferential side of a rotation shaft and swingably provided. Further, oil films are formed between the outer circumferential surface of the rotation shaft and the inner circumferential surfaces of the pads (hereinafter, referred to as "sliding parts"), and thereby, bear the radial load of the rotation shaft while preventing contact between the rotation shaft and the pads.

The tilting pad journal bearing is roughly divided into two depending on oil feeding systems. One system is called an oil bath system of filling pad holding spaces of a housing with lubricating oil to immersing the sliding parts. The other system is called a direct lubrication system of directly feeding lubricating oil to the sliding parts with a plurality of nozzles placed between the plurality of pads, not filling the pad holding spaces of the housing with lubricating oil (for example, see PTL 1). The direct lubrication system has advantages, compared to the oil bath system, that oil at a relatively low temperature may be fed to the sliding parts, the temperature of the sliding parts is easily reduced, and the quantity of oil feed may be made relatively small.

### Citation List

### Patent Literature

PTL 1: JP-A-11-182535

### Non Patent Literature

NPL 1: Edited by Japanese Society of Tribologists, Tribology Handbook, Yokendo (2001), pp. 53-57

### Summary of Invention

### Technical Problems

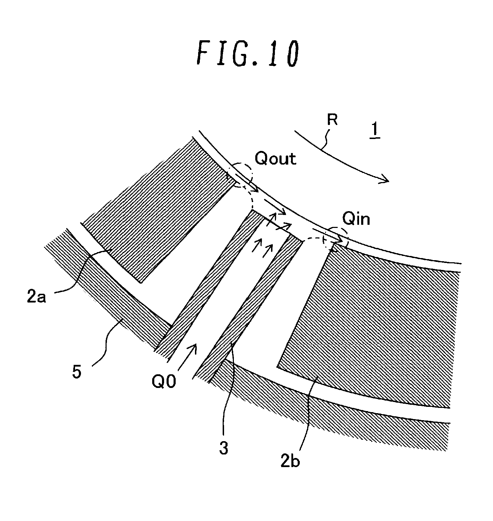

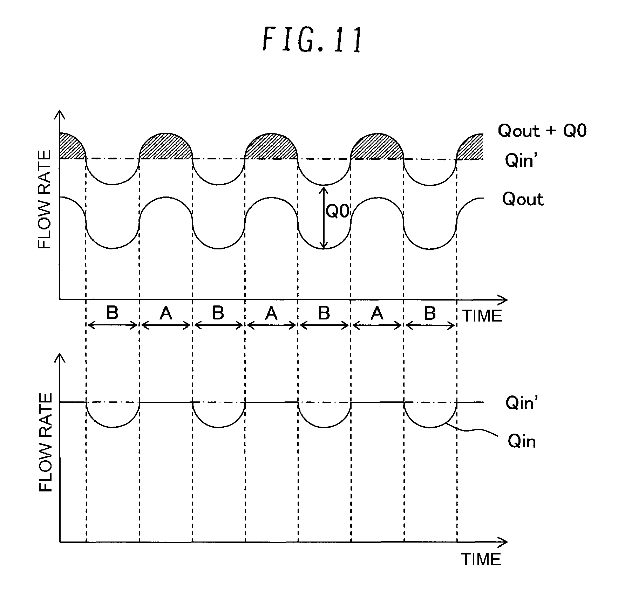

The tilting pad journal bearing is regarded as being unlikely to produce vibration such as oil whip and oil whirl generated at high-speed rotation exceeding the critical speed. However, in the direct lubrication tilting pad journal bearing, the quantity of oil feed may be insufficient and vibration may occur depending on the operation condition. The vibration phenomenon will be explained using Figs. 10 and 11. Fig. 10 is a partially enlarged sectional view of a bearing for explanation of oil flow in a structure of related art, and Fig. 11 shows temporal change of quantity Qₒᵤₜ of oil outflow from the upstream sliding part, quantity Q0 of oil feed from a nozzle, temporal change of quantity (Qₒᵤₜ + Q0) of oil feed to the downstream sliding part, quantity Qᵢₙ' of oil inflow necessary for the downstream sliding part, and temporal change of quantity Qᵢₙ of actual oil inflow in the downstream sliding part in the structure of related art.

In Fig. 10, a rotation shaft 1 is rotating in the rotation direction shown by an arrow R in the drawing. Further, the oil flowing out from the upstream sliding part (in detail, between the outer circumferential surface of the rotation shaft 1 and the inner circumferential surface of an upstream pad 2a) joins oil fed from a nozzle 3, and is fed to the downstream sliding part (in detail, between the outer circumferential surface of the rotation shaft 1 and the inner circumferential surface of a downstream pad 2b). In this regard, if the upstream pad 2a does not vibrate, the quantity Qₒᵤₜ of oil outflow from the upstream sliding part is constant and the quantity (Qₒᵤₜ + Q0) of oil feed to the downstream sliding part is also constant. Accordingly, for example, the oil feed quantity Q0 is determined so that the relationship of (Qₒᵤₜ + Q0) = Qᵢₙ' may be satisfied (or the quantity (Qₒᵤₜ + Q0) of oil feed to the downstream sliding part may be slightly larger than the necessary oil inflow quantity Qᵢₙ').

However, depending on the operation condition, load may become smaller in the pad 2a (in detail, for example, the pad located upside of the rotation shaft extending in the horizontal direction or the like), pressure generated on the oil film may become lower, and vibration may be generated in the pad 2a as an initial phenomenon of the shaft vibration. In this case, as shown in Fig. 11, the quantity Qₒᵤₜ of oil outflow from the upstream sliding part varies. Accordingly, the quantity (Qₒᵤₜ + Q0) of oil feed to the downstream sliding part also varies above and below the necessary oil inflow quantity Qᵢₙ'. Further, when the quantity (Qₒᵤₜ + Q0) of oil feed to the downstream sliding part is larger than the necessary oil inflow quantity Qᵢₙ' (see time A in Fig. 11), the excess (shaded parts in the drawing) flows down between the pad 2a and the pad 2b, but the necessary oil inflow quantity Qᵢₙ' is secured (i.e., the actual oil inflow quantity Qᵢₙ = Qᵢₙ'), and thus, the oil film is sufficiently formed in the downstream sliding part. On the other hand, when the quantity (Qₒᵤₜ + Q0) of oil feed to the downstream sliding part is smaller than the necessary oil inflow quantity Qᵢₙ' (see time B in Fig. 11), the necessary oil inflow quantity Qᵢₙ' may not be secured (i.e., the actual oil inflow quantity Qᵢₙ < Qᵢₙ'), and the oil film is insufficient in the downstream sliding part. Accordingly, the oil film in the downstream sliding part unstably changes and vibration is generated in the pad 2b, and then, vibration of the rotation shaft 1 is caused.

As one of methods for suppressing the vibration, there is a conceivable method of increasing the quantity Q0 of oil feed from the nozzle 3 to maintain the relationship of (Qₒᵤₜ + Q0) ≥ Qᵢₙ' even when the quantity Qₒᵤₜ of oil outflow from the upstream sliding part varies. However, in this case, the advantages of employment of the direct lubrication system are lost.

An object of the invention is to provide a direct lubrication tilting pad journal bearing that can suppress vibration without increase in a quantity of oil feed from nozzles.

### Solution to Problems

(1) To achieve the object, the invention is that, in a direct lubrication tilting pad journal bearing including a plurality of pads placed at an outer circumferential side of a rotation shaft and swingably provided, and a plurality of nozzles that are provided between the plurality of pads and directly feed oil between an outer circumferential surface of the rotation shaft and inner circumferential surfaces of the pads, the pad has an oil collection path in a groove shape formed so that an inlet may open to an opposite lateral side to a rotation direction of the rotation shaft in the pad, an outlet may open to an inner circumferential side of the pad, and the inlet and the outlet may continuously open, a width dimension of the oil collection path in an axial direction of the rotation shaft is smaller than a width dimension of the pad, and a depth dimension from the outer circumferential surface of the rotation shaft to a bottom surface of the oil collection path in a radial direction of the rotation shaft is larger than a distance from the outer circumferential surface of the rotation shaft to an end of the nozzle in the radial direction of the rotation shaft.
   In the invention, the oil flowing out from between the outer circumferential surface of the rotation shaft and the inner circumferential surface of the upstream pad (in other words, the upper sliding part) and the oil fed from the nozzle may be temporarily accumulated in the oil collection path of the downstream pad. Particularly, the depth dimension from the outer circumferential surface of the rotation shaft to the bottom surface of the oil collection path of the pad is larger than the distance from the outer circumferential surface of the rotation shaft to the end of the nozzle, and the oil from the upstream sliding part and the nozzle easily flows into the oil collection path of the downstream pad and the quantity of oil temporarily accumulated in the oil collection path may be secured. Thereby, if the upstream pad vibrates and the quantity of oil outflow from the upstream sliding part varies as the initial phenomenon of shaft vibration, the excess is accumulated in the oil collection path when the quantity of oil outflow from the upstream sliding part is larger and then the oil is supplied from the oil accumulated in the oil collection path when the quantity of oil outflow from the upstream sliding part is smaller, and thus, the quantity of oil inflow in the downstream sliding part may be stabilized. Therefore, the oil film in the downstream sliding part may be stabilized and vibration may be suppressed.
   As described above, in the invention, vibration may be suppressed without increase in the quantity of oil feed from the nozzle.
(2) In the (1), preferably, the depth dimension from the outer circumferential surface of the rotation shaft to the bottom surface of the oil collection path in the radial direction of the rotation shaft is larger than five times a gap dimension between the outer circumferential surface of the rotation shaft and the inner circumferential surface of the pad.
(3) In the (1) or (2), preferably, the depth dimension from the outer circumferential surface of the rotation shaft to the bottom surface of the oil collection path in the radial direction of the rotation shaft is gradually smaller toward the rotation direction of the rotation shaft.
(4) In any one of the (1) to (3), preferably, the nozzle is provided so that at least part of the end may be located nearer the rotation direction side of the rotation shaft than the inlet of the oil collection path.
(5) In any one of the (1) to (4), preferably, the width dimension of the oil collection path in the axial direction of the rotation shaft is gradually smaller toward the rotation direction of the rotation shaft.

### Advantageous Effects of Invention

According to the invention, vibration may be suppressed without increase in the quantity of oil feed from the nozzle.

### Brief Description of Drawings

[Fig. 1] Fig. 1 is a sectional view showing a structure of a direct lubrication tilting pad journal bearing in a first embodiment of the invention.
[Fig. 2] Fig. 2 is a perspective view showing a structure of a pad in the first embodiment of the invention with a nozzle.
[Fig. 3] Fig. 3 is a partially enlarged sectional view of the bearing for explanation of oil flow in the first embodiment of the invention.
[Fig. 4] Fig. 4 shows temporal change of quantity Qₒᵤₜ of oil outflow from an upstream sliding part, quantity Q0 of oil feed from a nozzle 3, temporal change of quantity (Qₒᵤₜ + Q0) of oil feed to a downstream sliding part, quantity Qᵢₙ' of oil inflow necessary for the downstream sliding part, and temporal change of quantity Qᵢₙ of actual oil inflow in the downstream sliding part in the first embodiment of the invention.
[Fig. 5] Fig. 5 is a perspective view showing a structure of a pad in a second embodiment of the invention with a nozzle.
[Fig. 6] Fig. 6 is a perspective view showing a structure of a pad in one modified example of the invention with a nozzle.
[Fig. 7] Fig. 7 is a perspective view showing a structure of a pad in a third embodiment of the invention with a nozzle.
[Fig. 8] Fig. 8 is a perspective view showing a structure of a pad in a fourth embodiment of the invention with a nozzle.
[Fig. 9] Fig. 9 is a perspective view showing a structure of a pad in another modified example of the invention with a nozzle.
[Fig. 10] Fig. 10 is a partially enlarged sectional view of a bearing for explanation of oil flow in a structure of related art.
[Fig. 11] Fig. 11 shows temporal change of quantity Qₒᵤₜ of oil outflow from an upstream sliding part, quantity Q0 of oil feed from a nozzle 3, temporal change of quantity (Qₒᵤₜ + Q0) of oil feed to a downstream sliding part, quantity Qᵢₙ' of oil inflow necessary for the downstream sliding part, and temporal change of quantity Qᵢₙ of actual oil inflow in the downstream sliding part in the structure of related art.

### Description of Embodiments

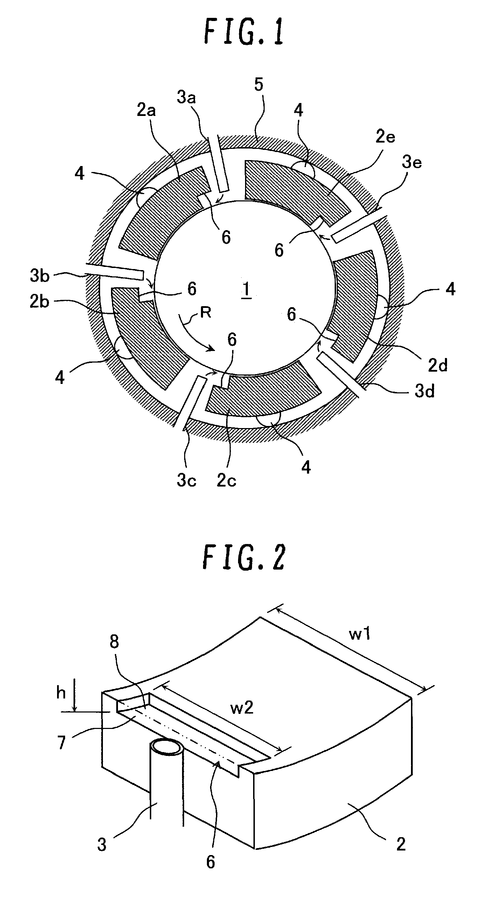

A first embodiment of the invention will be explained with reference to Figs. 1 to 4.

Fig. 1 is a sectional view showing a structure of a direct lubrication tilting pad journal bearing in the embodiment. Fig. 2 is a perspective view showing a structure of a pad in the embodiment with a nozzle.

In Figs. 1 and 2, the direct lubrication tilting pad journal bearing includes, for example, five pads 2a to 2e (hereinafter, appropriately and representatively referred to as "pad 2") placed at the outer circumferential side of a rotation shaft and swingably supported via pivots 4, five nozzle 3a to 3e provided between the pads 2a to 2e (hereinafter, appropriately and representatively referred to as "nozzle 3"), and a casing 5 housing the pads 2a to 2e and the nozzles 3a to 3e etc. Note that, in the embodiment, the rotation shaft 1 extends in the horizontal direction and the pads 2a, 2e are located upside of the rotation shaft 1. Further, the rotation shaft 1 is rotating in the rotation direction shown by an arrow R in Fig. 1.

Pad holding spaces of the housing 5 are not filled with lubricating oil and the lubricating oil is fed to the nozzles 3a to 3e via an annular oil feed path (not shown) formed at the outer circumferential side of the housing 5. Further, the oil from an oil feed port at the end of the nozzle 3a is directly fed between the outer circumferential surface of the rotation shaft 1 and the inner circumferential surface of the pad 2a, the oil from an oil feed port at the end of the nozzle 3b is directly fed between the outer circumferential surface of the rotation shaft 1 and the inner circumferential surface of the pad 2b, the oil from an oil feed port at the end of the nozzle 3c is directly fed between the outer circumferential surface of the rotation shaft 1 and the inner circumferential surface of the pad 2c, the oil from an oil feed port at the end of the nozzle 3d is directly fed between the outer circumferential surface of the rotation shaft 1 and the inner circumferential surface of the pad 2d, and the oil from an oil feed port at the end of the nozzle 3e is directly fed between the outer circumferential surface of the rotation shaft 1 and the inner circumferential surface of the pad 2e. Thereby, the oil at a relatively low temperature may be fed between the outer circumferential surface of the rotation shaft 1 and the inner circumferential surface of the pad 2, and the quantity of oil feed may be made smaller.

Further, when the rotation shaft 1 rotates, the oil is caught between the outer circumferential surface of the rotation shaft 1 and the inner circumferential surface of the pad 2, and an oil film is formed. The rotation shaft 1 is lifted by the pressure generated in the oil films and supported without direct contact with the pads 2a to 2e.

Here, as a great feature of the embodiment, in each pad 2, for example, a groove-shaped oil collection path (in other words, oil feed groove) 6 is formed by cutting work or molding. The oil collection path 6 is formed by cutting out one side of the pad 2 so that an inlet 7 may open in the opposite end surface (the left surface in Fig. 2) to the rotation direction of the rotation shaft 1 in the pad 2, an outlet 8 may open in the inner circumferential surface of the pad 2 (the upper surface in Fig. 2), and the inlet 7 and the outlet 8 may continuously open. Further, a width dimension w2 of the oil collection path 6 in the axial direction of the rotation shaft 1 is smaller than a width dimension w1 of the pad. Furthermore, in the embodiment, the width dimension w2 of the oil collection path 6 is constant toward the rotation direction of the rotation shaft 1.

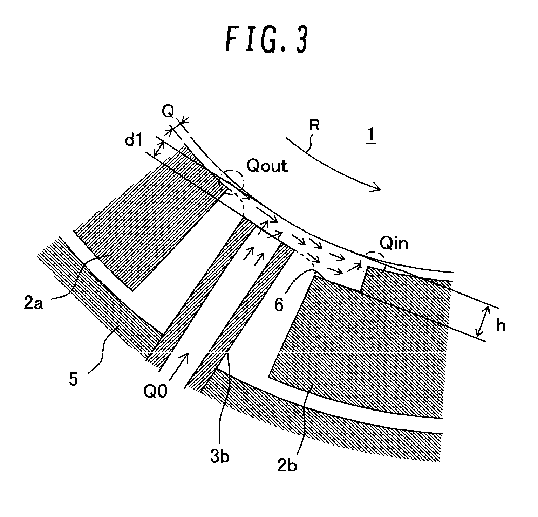

In addition, as will be shown in Fig. 3 later, a depth dimension h from the outer circumferential surface of the rotation shaft 1 to the bottom surface of the oil collection path 6 of the pad 2 in the radial direction of the rotation shaft 1 is larger than a distance d1 from the outer circumferential surface of the rotation shaft 1 to the end of the nozzle 3 in the radial direction of the rotation shaft 1, for example, about twice. Note that the distance d1 from the outer circumferential surface of the rotation shaft 1 to the end of the nozzle 3 is about five times to ten times a gap dimension d0 between the outer circumferential surface of the rotation shaft 1 and the inner circumferential surface of the pad 2, and thus, the depth dimension h from the outer circumferential surface of the rotation shaft 1 to the bottom surface of the oil collection path 6 of the pad 2 is larger than five times the above described gap dimension d0, for example, about ten times to twenty times. Further, in the embodiment, the depth dimension h from the outer circumferential surface of the rotation shaft 1 to the bottom surface of the oil collection path 6 of the pad 2 is constant toward the rotation direction of the rotation shaft 1.

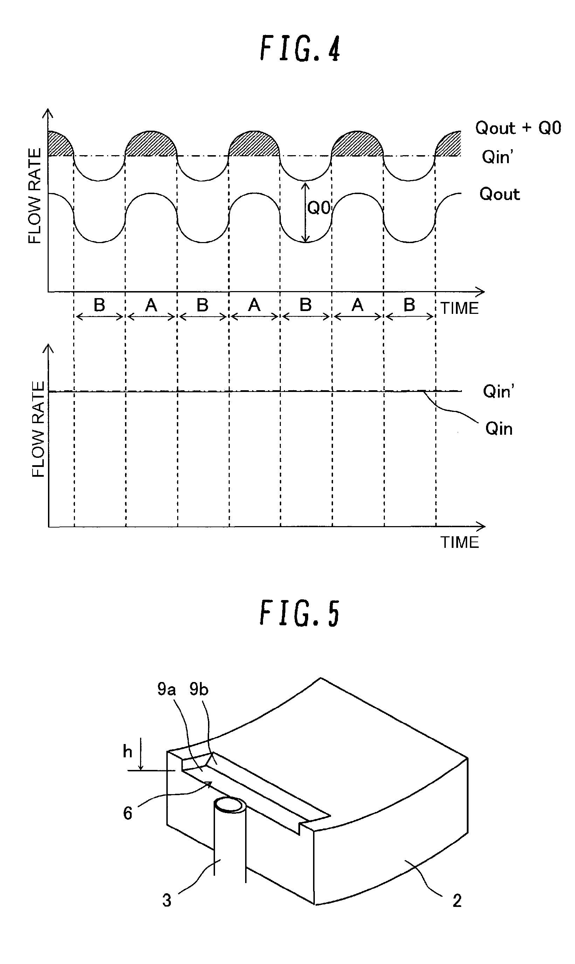

Next, the advantageous effects of the invention will be explained using Figs. 3 and 4. Fig. 3 is a partially enlarged sectional view of the bearing for explanation of oil flow in the embodiment. Fig. 4 shows temporal change of quantity Qₒᵤₜ of oil outflow from an upstream sliding part, quantity Q0 of oil feed from the nozzle 3, temporal change of quantity (Qₒᵤₜ + Q0) of oil feed to a downstream sliding part, quantity Qᵢₙ' of oil inflow necessary for the downstream sliding part, and temporal change of quantity Qᵢₙ of actual oil inflow in the downstream sliding part in the embodiment.

As shown in Fig. 3, the oil flowing out from the upstream sliding part (in detail, between the outer circumferential surface of the rotation shaft 1 and the inner circumferential surface of the upstream pad 2a) joins the oil fed from the nozzle 3b and fed to the downstream sliding part (in detail, between the outer circumferential surface of the rotation shaft 1 and the inner circumferential surface of the downstream pad 2b). In this regard, if the upstream pad 2a does not vibrate, the quantity Qₒᵤₜ of oil outflow from the upstream sliding part is constant and the quantity (Qₒᵤₜ + Q0) of oil feed to the downstream sliding part is also constant. Accordingly, the quantity Q0 of oil feed is determined so that the relationship of (Qₒᵤₜ + Q0) = Qᵢₙ' may be satisfied (or the quantity (Qₒᵤₜ + Q) of oil feed to the downstream sliding part may be slightly larger than the necessary oil inflow quantity Qᵢₙ').

However, depending on the operation condition, load may become smaller in the pad 2a, pressure generated on the oil film may become lower, and vibration may be generated in the pad 2a as an initial phenomenon of shaft vibration. In this case, as shown in Fig. 4, the quantity Qₒᵤₜ of oil outflow from the upstream sliding part varies. Accordingly, the quantity (Qₒᵤₜ + Q0) of oil feed to the downstream sliding part also varies above and below the necessary oil inflow quantity Qᵢₙ'.

Here, in the embodiment, the oil from the upstream sliding part and the nozzle 3b may be temporarily accumulated in the oil collection path 6 of the downstream pad 2b. Particularly, the depth dimension h from the outer circumferential surface of the rotation shaft 1 to the bottom surface of the oil collection path 6 of the pad 2 is larger than the distance d from the outer circumferential surface of the rotation shaft 1 to the end of the nozzle 3, and thus, the oil from the upper sliding part and the nozzle 3 easily flows into the oil collection path 6 of the downstream pad 2b, and the quantity of oil temporarily accumulated in the oil collection path 6 may be secured.

Further, if the quantity (Qₒᵤt + Q0) of oil feed to the downstream sliding part is larger than the necessary oil inflow quantity Qᵢₙ' (see time domain A in Fig. 4), the necessary oil inflow quantity Qᵢₙ' may be secured (i.e., the actual oil inflow quantity Qᵢₙ = Qᵢₙ') and the excess (shaded parts in the drawing) flows into the oil collection path 6 of the downstream pad 2b and may be temporarily accumulated. Then, if the quantity (Qₒᵤₜ + Q0) of oil feed to the downstream sliding part is smaller than the necessary oil inflow quantity Qᵢₙ' (see time domain B in Fig. 11), the oil is supplied from the oil accumulated in the oil collection path 6 of the downstream pad 2b, and thus, the necessary oil inflow quantity Qᵢₙ' may be secured (i.e., the actual oil inflow quantity Qᵢₙ = Qᵢₙ'). Thereby, the quantity Qᵢₙ of oil inflow in the downstream sliding part may be stabilized, and the oil film in the downstream sliding part may be stabilized. Therefore, vibration may be suppressed without increase in the quantity Q0 of oil feed from the nozzle 3.

Note that, in the first embodiment, the configuration including the five pads 2a to 2e and the five nozzles 3a to 3e has been explained as an example, but not limited to that. Obviously, it is only necessary that a plurality of pads 2 and a plurality of nozzles 3 are provided.

A second embodiment of the invention will be explained with reference to Fig. 5. Note that, in the embodiment, the equal parts to those of the first embodiment have the same signs and their explanation will be appropriately omitted.

Fig. 5 is a perspective view showing a structure of a pad 2 in the embodiment with a nozzle 3.

In the embodiment, the oil collection path 6 of the pad 2 has bottom surfaces 9a, 9b. Further, the depth dimension h from the outer circumferential surface of the rotation shaft 1 to the bottom surface 9a of the oil collection path 6 of the pad 2 is larger than the distance d from the outer circumferential surface of the rotation shaft 1 to the end of the nozzle 3 and constant toward the rotation direction of the rotation shaft 1. On the other hand, a depth dimension from the outer circumferential surface of the rotation shaft 1 to the bottom surface 9b of the oil collection path 6 of the pad 2 is gradually smaller toward the rotation direction of the rotation shaft 1. That is, the bottom surface 9b of the oil collection path 6 of the pad 2 is formed to incline in the rotation direction of the rotation shaft 1.

Also, in the embodiment, like the first embodiment, vibration may be suppressed without increase in the quantity Q0 of oil feed from the nozzle 3. Further, in the embodiment, the depth dimension from the outer circumferential surface of the rotation shaft 1 to the bottom surface of the oil collection path 6 of the pad 2 is gradually smaller toward the rotation direction of the rotation shaft 1, and thus, the oil easily flows from the oil collection path 6 of the pad 2 into the inner circumferential surface of the pad 2, and the oil film may be stabilized. Thereby, the vibration may be further suppressed.

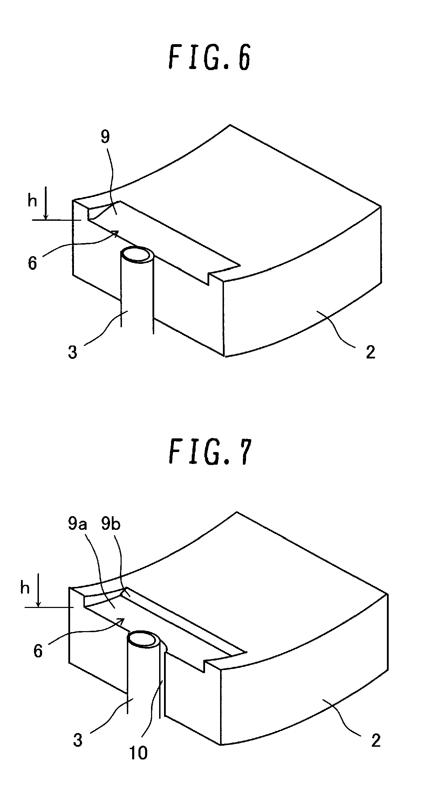

Note that, in the second embodiment, the case where the bottom surface of the oil collection path 6 of the pad 2 is formed to partially incline has been explained as an example, but not limited to that. For example, as shown in Fig. 6, a whole bottom surface 9 of the oil collection path 6 of the pad 2 may be formed to incline. In this regard, it is only necessary that the depth dimension h in the inlet of the oil collection path 6 of the pad 2 is larger than the distance d from the outer circumferential surface of the rotation shaft 1 to the end of the nozzle 3. In the modified example, the same advantages as those of the second embodiment may be obtained.

A third embodiment of the invention will be explained with reference to Fig. 7. Note that, in the embodiment, the equal parts to those of the second embodiment have the same signs and their explanation will be appropriately omitted.

Fig. 7 is a perspective view showing a structure of a pad 2 in the embodiment with a nozzle 3.

In the embodiment, the nozzle 3 is provided so that at least part of the end (a half of the section in the embodiment) may be located nearer the rotation direction side of the rotation shaft 1 than the inlet 7 of the oil collection path 6 of the pad 2. That is, a cutout 10 for placement of the nozzle 3 is formed on the opposite end surface to the rotation direction of the rotation shaft 1 in the pad 2, and the nozzle 3 is placed not to interfere with the pad 2.

In the embodiment, like the first and second embodiments, vibration may be suppressed without increase in the quantity of oil feed from the nozzle 3. Further, in the embodiment, at least part of the end of the nozzle 3 is located nearer the rotation direction side of the rotation shaft 1 than an inlet 6a of the oil collection path 6 of the pad 2, and thus, the oil from the nozzle 3 flows into the oil collection path 6 of the pad 2 without spattering in the axial direction of the rotation shaft 1. Thereby, the quantity of oil feed from the nozzle 3 may be suppressed.

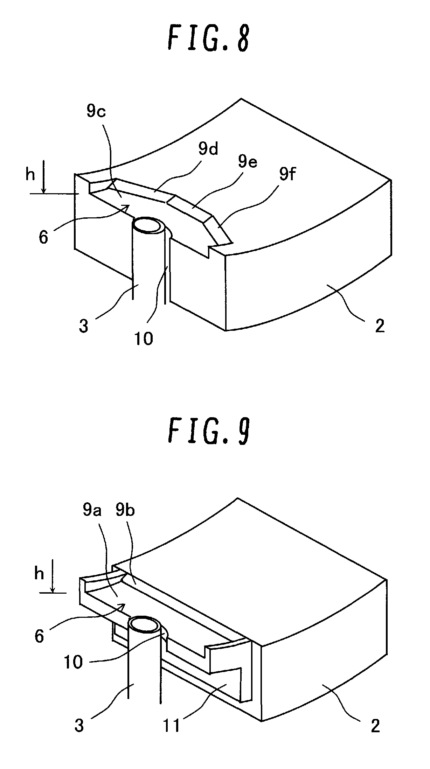

A fourth embodiment of the invention will be explained with reference to Fig. 8. Note that, in the embodiment, the equal parts to those of the third embodiment have the same signs and their explanation will be appropriately omitted.

Fig. 8 is a perspective view showing a structure of a pad 2 in the embodiment with a nozzle 3.

In the embodiment, the oil collection path 6 of the pad 2 has bottom surfaces 9c, 9d, 9e, 9f. Further, the bottom surfaces 9d, 9e, 9f of the oil collection path 6 of the pad 2 are formed to incline in the rotation direction of the rotation shaft 1. Thereby, the depth dimension from the outer circumferential surface of the rotation shaft 1 to the bottom surface of the oil collection path 6 of the pad 2 is gradually smaller toward the rotation direction of the rotation shaft 1. Further, the bottom surfaces 9d, 9f of the oil collection path 6 of the pad 2 are formed to incline in the width direction of the pad 2. Thereby, the width dimension of the oil collection path 6 is gradually smaller toward the rotation direction of the rotation shaft.

In the embodiment, like the first to third embodiments, vibration may be suppressed without increase in the quantity of oil feed from the nozzle 3. Further, in the embodiment, the depth dimension from the outer circumferential surface of the rotation shaft 1 to the bottom surface of the oil collection path 6 of the pad 2 is gradually smaller toward the rotation direction of the rotation shaft 1 and the width dimension of the oil collection path 6 is gradually smaller toward the rotation direction of the rotation shaft 1, and thus, the oil easily flows from the oil collection path 6 of the pad 2 into the inner circumferential surface of the pad 2, and the oil film may be stabilized. Thereby, the vibration may be further suppressed.

Note that, in the first to fourth embodiments and the modified example, the case where the oil collection path 6 is formed by cutting work or molding of the pad 2 has been explained as an example, but not limited to that. That is, for example, as shown in Fig. 9, a member 11 with the oil collection path 6 formed therein may be joined to the opposite end surface to the rotation direction of the rotation shaft 1 in the pad 2. In the modified example, the same advantages may be obtained.

### Reference Signs List

- 1: rotation shaft
- 2, 2a to 2e: pad
- 3, 3a to 3e: nozzle
- 6: oil collection path

## Claims

1. A direct lubrication tilting pad journal bearing, comprising:
a plurality of pads placed at an outer circumferential side of a rotation shaft and swingably provided; and
a plurality of nozzles that are provided between the plurality of pads and directly feed oil between an outer circumferential surface of the rotation shaft and inner circumferential surfaces of the pads,
wherein the pad has an oil collection path in a groove shape formed so that an inlet may open to an opposite lateral side to a rotation direction of the rotation shaft in the pad, an outlet may open to an inner circumferential side of the pad, and the inlet and the outlet may continuously open,
a width dimension of the oil collection path in an axial direction of the rotation shaft is smaller than a width dimension of the pad, and
a depth dimension from the outer circumferential surface of the rotation shaft to a bottom surface of the oil collection path in a radial direction of the rotation shaft is larger than a distance from the outer circumferential surface of the rotation shaft to an end of the nozzle in the radial direction of the rotation shaft.

2. The direct lubrication tilting pad journal bearing according to claim 1, wherein the depth dimension from the outer circumferential surface of the rotation shaft to the bottom surface of the oil collection path in the radial direction of the rotation shaft is larger than five times a gap dimension between the outer circumferential surface of the rotation shaft and the inner circumferential surface of the pad.

3. The direct lubrication tilting pad journal bearing according to claim 1 or 2, wherein the depth dimension from the outer circumferential surface of the rotation shaft to the bottom surface of the oil collection path in the radial direction of the rotation shaft is gradually smaller toward the rotation direction of the rotation shaft.

4. The direct lubrication tilting pad journal bearing according to any one of claims 1 to 3, wherein the nozzle is provided so that at least part of the end may be located nearer the rotation direction side of the rotation shaft than the inlet of the oil collection path.

5. The direct lubrication tilting pad journal bearing according to any one of claims 1 to 4, wherein the width dimension of the oil collection path in the axial direction of the rotation shaft is gradually smaller toward the rotation direction of the rotation shaft.
